# EUROPEAN PATENT SPECIFICATION

(11) **EP 2 116 369 B1**
(45) Date of publication and mention of the grant of the patent: **28.12.2016**
(21) Application number: 08711414.6
(22) Date of filing: 08.02.2008
(51) Int. Cl.: B32B 15/08, B05D 7/14, C09D 5/00, C09D 5/29, C09D 7/12, C09D 201/00, C23C 28/00, B05D 5/06, B05D 7/00, C09D 5/08, C09D 5/24, C09D 5/36, C08K 3/08

(54) **COATED STEEL SHEET AND TELEVISION PANEL MADE OF THE SHEET**
BESCHICHTETES STAHLBLECH UND AUS DEM BLECH HERGESTELLTES FLÄCHENGEBILDE FÜR FERNSEHER
TÔLE D'ACIER REVÊTUE ET PANNEAU DE TÉLÉVISION COMPOSÉ DE LA TÔLE

(30) Priority: 28.02.2007 JP 2007050254
(43) Date of publication of application: 11.11.2009
(73) Proprietor: JFE Steel Corporation, Tokyo 100-0011 (JP)
(72) Inventor: TADA, Chiyoko, Tokyo 100-0011 (JP); OGATA, Hiroyuki, Tokyo 100-0011 (JP)
(74) Representative: Hoffmann Eitle
(86) International application number: PCT/JP2008/052584
(87) International publication number: WO 2008/105247

(56) References cited:
- JP-A- 09 155 283
- JP-A- 09 155 283
- JP-A- 2004 050 461
- JP-A- 2006 264 083
- JP-A- 2008 036 980
- JP-A- 2008 036 980
- JP-A- 2008 055 774
- JP-A- 2008 055 774
- US-B1- 6 610 422

## Description

### Technical Field

The present invention relates to a coated steel sheet produced by sequentially forming a galvanized layer and a chromium-free chemical conversion film on both sides of a steel sheet, on the chemical conversion film disposed on one side of the steel sheet, and that has high brightness and a high capability of hiding the color and flaws of the steel sheet even with a thin film having a total thickness of 10 µm or less, and a television cover formed of the coated steel sheet. A coated steel sheet according to the present invention can be used as a.material for AV equipment, for example, covers for flat panel displays, such as liquid crystal televisions and plasma televisions.

### Background Art

In general, in precoated steel sheets (coated steel sheets) for use in television covers, a modified polyester resin or an epoxy resin is primarily used as an undercoat paint to provide adhesion to a steel sheet substrate (chemical conversion treated steel sheet) and corrosion resistance, and a polyester or acrylic paint is used as a topcoat paint applied to the undercoat paint to primarily provide stain resistance, excellent design, scratch resistance, and barrier properties, such as hydrochloric acid resistance and alkali resistance.

In known coated steel sheets, as disclosed in Japanese Unexamined Patent Application Publication No. 4-215873, in general, the thickness of an undercoat is about 5 µm, the thickness of a topcoat is about 15 µm, and their total film thickness is 20 µm. However, since such coated steel sheets require extended periods of coating and baking, there is a demand for thin films in view of the rationalization of coating and resource conservation.

In the formation of a film having a known composition and a thickness of 10 µm or less, it is generally assumed that the thickness of a topcoat fluctuates by about ± 1.5 µm around the target film thickness. Thus, the color and flaws of a steel sheet substrate surface (chemical conversion treated surface) may be partly visible. Furthermore, the film thickness variations of about ± 1.5 µm cause variations in lightness (L value), resulting in defective surface appearance and inconsistent design.

Thus, the present inventors have test-manufactured a coated steel sheet that includes a topcoat having a thickness of 10 µm or less and containing a color pigment to hide the color and flaws of a substrate. However, because the topcoat does not reflect but absorbs most of incident light, this coated steel sheet lacks a metallic look or glitter (hereinafter referred to as brightness) when viewed at a certain angle. Thus, it has been concluded that the coated steel sheet cannot be used in applications that require brightness, such as high-grade products.

A coated steel sheet that has high brightness and a high capability of hiding the color and flaws of a substrate may have a topcoat that contains both a color pigment and a brightening agent. However, in such a coated steel sheet, the presence of both a color pigment and a brightening agent in the topcoat limits the maximum content of the color pigment, and consequently the topcoat must have a thickness as large as 15 µm or more. Furthermore, the presence of both a color pigment and a brightening agent in the topcoat results in a high content of these additives, thus reducing the strength of the topcoat.

It is an object of the present invention to provide a coated steel sheet for use in television covers that has high brightness and a high capability of hiding the color and flaws of a substrate even when the film thickness is 10 µm or less, and a television cover formed of the coated steel sheet.

### Disclosure of Invention

The present invention has been accomplished on the basis of these findings, and the summary of the present invention will be described below.

The present invention provides a coated steel sheet includes a steel sheet, a galvanized layer disposed on both sides of the steel sheet, a chromium-free chemical conversion film disposed on the galvanized layers, an undercoat containing a color pigment disposed on one of the chemical conversion films, and an organic resin topcoat containing a brightening agent disposed on the undercoat, and the total thickness of the undercoat and the topcoat is 10 µm or less.

Preferably, the coated steel sheet contains 15% by mass or more of the color pigment in the undercoat.

Preferably, in any of the coated steel sheets described above, the color pigment contains at least 5% by mass of black pigment.

Preferably, in any of the coated steel sheets described above, the color pigment is a black pigment of carbon black.

Preferably, in any of the coated steel sheets described above, the content of the brightening agent in the topcoat ranges from 0.1% to 10% by mass.

Preferably, in any of the coated steel sheets described above, the brightening agent consists of Al flakes.

Preferably, in any of the coated steel sheets described above, the thickness of the undercoat ranges from 2 to 9 µm, and the thickness of the topcoat ranges from 1 to 8 µm.

Preferably, in any of the coated steel sheets described above, the conducting load between the topcoat side of the coated steel sheet and the opposite side is 500 g or less.

Preferably, in any of the coated steel sheets described above, the coated steel sheet is entirely convex on the topcoat side.

The present invention also provides a television cover formed of any of the coated steel sheets described above that is entirely convex on the topcoat side, in which the topcoat of the coated steel sheet faces outward.

The present invention also provides a coated steel sheet, wherein a galvanized layer and a chromium-free chemical conversion film are sequentially formed on both sides of a steel sheet, an undercoat containing a color pigment is formed on the chemical conversion film disposed on one side of the steel sheet, a topcoat formed of an organic resin film containing a brightening agent is formed on the undercoat, and the total thickness of the undercoat and the topcoat is 10 µm or less.

### Brief Description of Drawings

Fig. 1 is a schematic view illustrating a method for measuring brightness.
Figs. 2(a) and 2(b) are cross-sectional views of known coated steel sheets, illustrating rays of light in the coated steel sheets having difference compositions.
Fig. 3 is a cross-sectional view of a coated steel sheet according to the present invention, illustrating rays of light in the coated steel sheet having a difference composition.
Fig. 4 is a graph illustrating an example of variation in lightness (L value) as a function of the thickness of an undercoat.
Fig. 5 is a graph illustrating lightness (L value) as a function of acceptance angle in accordance with Example 1 and Comparative Examples 1 and 2.

### Best Modes for Carrying Out the Invention

As a result of repeated investigations to solve the above-mentioned problems and provide an excellent thin-film coated steel sheet, the present inventors have found that a coated steel sheet having high brightness and a high capability of hiding the color and flaws of a substrate can be obtained even at a total film thickness of 10 µm or less when a galvanized layer and a chromium-free chemical conversion film are sequentially formed on both sides of a steel sheet, an undercoat containing a color pigment is formed on the chemical conversion film disposed on one side of the steel sheet to hide the color and flaws of the steel sheet, and a topcoat formed of an organic resin film containing a brightening agent is formed on the undercoat to achieve brightness.

The present invention will be described in detail below.

A coated steel sheet according to the present invention includes a steel sheet, a galvanized layer disposed on both sides of the steel sheet, a chromium-free chemical conversion film disposed on the galvanized layers, an undercoat containing a color pigment disposed on one of the chemical conversion films, and an organic resin topcoat containing a brightening agent disposed on the undercoat, and the total thickness of the undercoat and the topcoat is 10 µm or less.

### (Steel Sheet)

A steel sheet for use in a coated steel sheet according to the present invention is preferably, but not limited to, a cold-rolled steel sheet, in particular a steel sheet for use in structures, such as automobiles and household electrical appliance housings. The steel sheet may contain any component. Examples of the steel sheet include steel sheets, such as IF steel, aluminum-killed steel, Cr-containing steel, and stainless steel, and high-tensile steel sheets.

### (Galvanization)

Examples of a galvanized steel sheet for use in a coated steel sheet according to the present invention include hot-dip galvanized steel sheets, electrogalvanized steel sheets, galvannealed steel sheets, aluminum-zinc alloy coated steel sheets (for example, hot-dip zinc-aluminum (55% by mass) alloy coated steel sheets and hot-dip zinc-aluminum (5% by mass) alloy coated steel sheets), iron-zinc alloy coated steel sheets, nickel-zinc alloy coated steel sheets, and nickel-zinc alloy coated steel sheets after blackening treatment.

### (Chemical Conversion Coating)

A chemical conversion film is formed on both sides of the galvanized steel sheet having a galvanized layer. A galvanized steel sheet subjected to chemical conversion treatment is herein referred to as a steel sheet substrate. A chemical conversion film according to the present invention contains no chromium from an environmental protection point of view. The chemical conversion film is formed primarily to improve the adhesion between the galvanized layer and an undercoat. The chemical conversion film may be any film that can improve the adhesion and is more preferably a film that can improve corrosion resistance as well as the adhesion. Preferably, the chemical conversion film contains silica fine particles in view of the adhesion and corrosion resistance and phosphoric acid and/or a phosphoric acid compound in view of corrosion resistance. The silica fine particles may be wet silica or dry silica and is preferably silica fine particles that can greatly improve the adhesion, particularly dry silica. Preferably, the silica fine particles have an average size of 100 nm or less.

Phosphoric acid and the phosphoric acid compound may contain at least one selected from the group consisting of orthophosphoric acid, diphosphoric acid, polyphosphoric acid, and metallic salts and compounds thereof. At least one selected from the group consisting of resins, such as an acrylic resin, a silane coupling agent, and other additives may be further added. A chemical conversion film having a small thickness tends to have poor adhesion and corrosion resistance, and a chemical conversion film having a large thickness tends to have poor electromagnetic shielding. The chemical conversion film therefore preferably has a thickness in the range of 0.02 to 1.0 µm.

Such a chemical conversion film can provide corrosion resistance and adhesion comparable to those of conventional chromate films.

### (Undercoat)

An undercoat according to the present invention is formed as a layer underlying a topcoat on a chemical conversion film disposed on one side of the steel sheet substrate. The undercoat need to contain a color pigment.

The present inventors have studied to manufacture a coated steel sheet that has high brightness and a high capability of hiding the color and flaws of a substrate while defining the total thickness of an undercoat and a topcoat to be 10 µm or less.

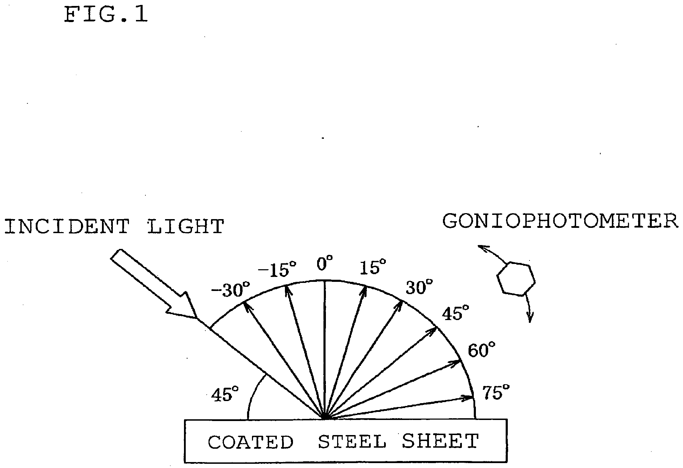

The term "brightness" means that a steel sheet irradiated with light looks like a shining metal when viewed from a certain direction. In the present invention, as illustrated in Fig. 1, light incident at an angle of 45° and reflected from the coated steel sheet is measured as lightness (L value) with a goniophotometer disposed at an acceptance angle of 45° to quantify the brightness.

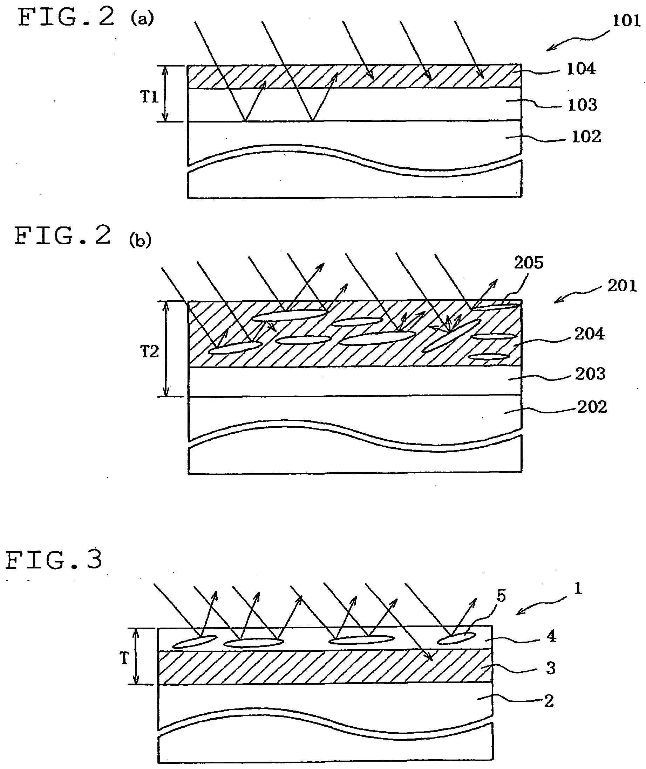

Figs. 2(a) and 2(b) and Fig. 3 are schematic views illustrating the relationship between films on a coated steel sheet, incident light, and reflected light.

As illustrated in Fig. 2(a), in a conventional coated steel sheet 101 in which a transparent undercoat 103 and a topcoat 104 containing a color pigment are formed on a steel sheet substrate 102, which is the galvanized steel sheet subjected to the chemical conversion treatment, when the total thickness T1 of the undercoat 103 and the topcoat 104 is 10 µm or less, the color pigment contained in the topcoat 104 prevents the color and flaws of the surface of the steel sheet substrate 102 from being visible. However, the absence of a brightening agent causes incident light and light reflected from the steel sheet substrate 102 to be absorbed or scattered in the topcoat 104, resulting in low brightness.

As illustrated in Fig. 2(b), in a conventional coated steel sheet 201 that contains a color pigment and a brightening agent 205 in a topcoat 204, the color pigment in the topcoat 204 prevents the color and flaws of the steel sheet substrate 202 from being visible, and the brightening agent 205 reflects incident light, thus achieving high brightness. However, among the reflected light, light other than light reflected by part of the brightening agent contained in a surface portion of the topcoat 204 is absorbed or scattered in the topcoat 204. Thus, the brightening agent 205 must be contained in a large amount to achieve the desired brightness. However, when the total film thickness T2 is at least 10 µm or less, it is difficult to contain a sufficient amount of brightening agent. Even if a sufficient amount of brightening agent exists, problems, such as low film strength and poor barrier properties, may occur, leading to deterioration in pressability and corrosion resistance.

Thus, as illustrated in Fig. 3, the present inventors have contrived a film structure in which a color pigment is contained in an undercoat 3 to hide the color and flaws of a steel sheet substrate 2, and a proper amount of brightening agent 5 is contained in a topcoat 4 to achieve brightness. More specifically, the undercoat 3 and the topcoat 4 achieve hiding capability and brightness, respectively, and prevent light reflected from the brightening agent 5 from being absorbed or scattered in the topcoat 4. Thus, even when the total film thickness T is 10 µm or less, high brightness and a capability of hiding the color and flaws of a substrate can be achieved. On the basis of these findings, the present inventors completed the present invention.

The undercoat 3 preferably contains at least one selected from the group consisting of a polyester resin, an epoxy-modified polyester resin, an epoxy resin, an acrylic resin, and a urethane resin to provide adhesion to a steel sheet substrate and corrosion resistance.

Preferably, the content of the color pigment in the undercoat is 15% by mass or more. This is because 15% by mass or more of the color pigment has a sufficient capability of hiding the color and flaws of a substrate. More preferably, the content of the color pigment is 60% by mass or less in view of workability in mixing with an undercoat paint and adjustment of the film thickness.

Preferably, the color pigment contains at least 5% by mass of black pigment. More preferably, the color pigment contains at least 6.6% by mass of black pigment. On the basis of an undercoat, preferably at least 0.75% by mass, more preferably at least 1% by mass of black pigment is contained in the undercoat. At least 5% by mass of black pigment in the color pigment improves a capability of hiding the color and flaws of a substrate. More preferably, the content of the black pigment is 8% by mass or less in view of workability in mixing with an undercoat paint and adjustment of the film thickness.

The black pigment is more suitably carbon black. This is because a small amount of carbon black can provide a color and exhibits a high hiding capability.

### (Topcoat)

As illustrated in Fig. 3, a topcoat 4 according to the present invention is an organic resin film formed on the undercoat 3 and containing a brightening agent 5.

Examples of the organic resin film include a polyester resin, an epoxy-modified polyester resin, and an acrylic resin. In particular, a polyester resin and an acrylic resin are preferably used to primarily provide stain resistance, excellent design, scratch resistance, and barrier properties.

As illustrated in Fig. 3, the brightening agent 5 refers to a design pigment, a so-called metallic pigment, that reflects incident light and thereby imparts brightness to the film, and may be any reflective material. For example, the brightening agent 5 is a metal, such as Al, Cu, or stainless (SUS). The brightening agent 5 may have any shape, such as flake, granular, or fibrous.

Preferably, the content of the brightening agent 5 ranges from 0.1% to 10% by mass. At 0.1% by mass or more, the brightening agent 5 overlaps one another in the topcoat 4 and can sufficiently cover the steel sheet substrate 2, thus achieving consistent brightness. At 10% by mass or less, the topcoat 4 has improved film-forming properties.

Preferably, the brightening agent 5 consists of Al flakes. This is because Al is effective as a brightening agent, is widely used, and is flexible. In addition, Al of flake shape can effectively cover the steel sheet substrate 2 in the topcoat 4. More specifically, "Al flakes", as used herein, may have an average particle size in the range of 5 to 50 µm and an average thickness in the range of 0.02 to 0.7 µm. The average particle size and the average thickness are mean values for ten particles determined with an optical microscope or an electron microscope. More specifically, the average particle size is the mean value of ten Al particle sizes, each of which is the mean value of the maximum diameter and the minimum diameter of a flat surface portion of an Al flake as viewed from a direction perpendicular to the flat surface. The average thickness is the mean value of ten thicknesses, each of which is the mean thickness of an Al flake measured at two positions in the cross-sectional direction. Preferably, Al flakes to be contained in the topcoat 4 are previously coated with an organic resin. This increases adhesion to the organic resin that forms the topcoat and thereby improves barrier properties (hydrochloric acid resistance and alkali resistance). The thickness of the organic resin covering Al flakes suitably ranges from 0.02 to 0.08 µm to achieve excellent barrier properties. The organic resin to coat the Al flakes 5 may be an acrylic resin.

Preferably, the topcoat 4 contains the polyester resin cured with a cross-linker and resin particles that have an average particle size in the range of 3 to 40 µm, a glass transition temperature in the range of 70°C to 200°C, and a hardness higher than the hardness of the polyester resin.

For example, the cross-linker for curing the polyester resin is preferably a melamine resin, urea, or an isocyanate to balance press formability and chemical resistance. The melamine resin is produced by etherifying part or all of the methylol groups of a condensation product between melamine and formaldehyde with a lower alcohol, such as methanol, ethanol, or butanol.

The polyester resin can be cured with a cross-linker to improve film toughness and achieve excellent press formability. The polyester resin used herein has a number-average molecular weight in the range of 5000 to 25000, preferably in the range of 10000 to 22000, a glass transition temperature Tg in the range of 20°C to 80°C, preferably in the range of 50°C to 70°C, a hydroxyl value in the range of 3 to 30 mgKOH/g, preferably in the range of 4 to 20 mgKOH/g, and an acid value in the range of 0 to 10 mgKOH/g, preferably in the range of 3 to 9 mgKOH/g.

A polyester resin having a number-average molecular weight of at least 5000 tends to have sufficient film elongation, improved press formability, and improved film adhesiveness after forming. At a number-average molecular weight of 25000 or less, the proportion of the resin in the paint is appropriate, the paint composition has a suitable viscosity without a diluent, and an appropriate film can be formed easily. Furthermore, the polyester resin tends to have improved compatibility with other components. A polyester resin having a glass transition temperature Tg of at least 20°C has improved film toughness and satisfactory press formability. Characteristics such as film hardness and film adhesiveness after forming also tend to improve. At a glass transition temperature Tg of 80°C or less, sufficient bending workability can also be readily achieved. A polyester resin having a hydroxyl value of 3 mgKOH/g or more can be easily cross-linked and easily have sufficient film hardness. At a hydroxyl value of 30 mgKOH/g or less, satisfactory workability can be easily achieved. A polyester resin having an acid value of 10 mgKOH/g or less tends to have improved compatibility with other components.

The polyester resin is produced by polycondensation between a polybasic acid and a polyhydric alcohol by a common procedure. If the resulting polyester resin has a very small number of free carboxyl groups and a low acid value, part of the hydroxyl groups of the polyester resin may be modified with a carboxylic acid to increase the acid value to at least 3 mgKOH/g (but less than 10 mgKOH/g). This can further increase the adhesion to the substrate and the curing rate. Typical examples of the polybasic acid include terephthalic acid, isophthalic acid, phthalic acid, succinic acid, adipic acid, sebacic acid, malonic acid, oxalic acid, and trimellitic acid, and lower alkyl esters and acid anhydrides thereof.

### (Film Thickness)

In a coated steel sheet according to the present invention, the total thickness of the undercoat and the topcoat must be 10 µm or less. Although the film thickness may be increased as in conventional coated steel sheets, the present invention can obviously achieve the above-mentioned effects at a film thickness as small as 10 µm or less.

Preferably, the undercoat 3 has a thickness in the range of 2 to 9 µm, and the topcoat has a thickness in the range of 1 to 8 µm**.**

An undercoat 3 having a thickness of 2 µm or more can easily have a uniform thickness. Thus, the content of the color pigment can be increased. This stabilizes color tone and provides a sufficient capability of hiding the color and flaws of the substrate. This is also preferred in terms of corrosion resistance. When the undercoat 3 has a thickness below 9 µm, the topcoat 4 can have a large thickness and easily achieve sufficient brightness. The thickness of the undercoat is a mean value of measurements at 15 points or more, 3 points in each of at least 5 fields, observed in a cross-section of the undercoat with an optical microscope or an electron microscope.

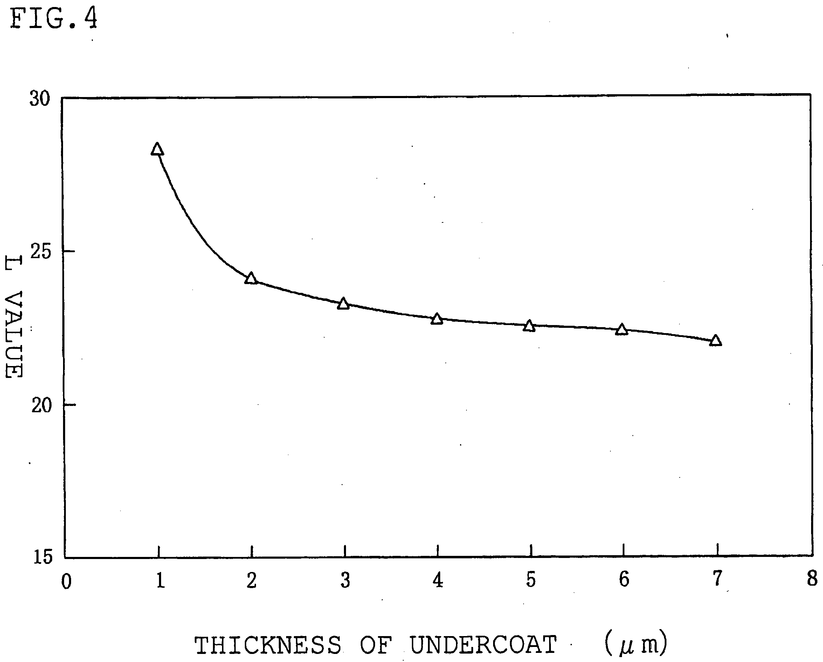

Fig. 4 is a graph illustrating lightness (L value) as a function of the thickness of an undercoat in a coated steel sheet in which an undercoat containing 13.3% by mass (2.8% by mass on the basis of the undercoat) of black pigment in a color pigment is formed alone on the steel sheet substrate. Fig. 4 shows that a thickness of an undercoat of 2 µm or more results in small variations in L value and stable color tone.

A topcoat having a thickness of at least 1 µm has sufficient brightness and scratch resistance in press forming. A thickness of the topcoat of 8 µm or less is advantageous in terms of the rationalization of coating and resource conservation. The thickness of the topcoat is a mean value of measurements at 15 points or more, 3 points in each of at least 5 fields, observed in a cross-section of the topcoat with an optical microscope or an electron microscope.

### (The Other Side of Coated Steel Sheet)

When a coated steel sheet according to the present invention is used as a television cover, in particular a flat panel display cover, the other side of the coated steel sheet opposite to the topcoat (also referred to as "the other side of the coated steel sheet") corresponds to the inner surface of the cover and is preferably electrically conductive for the purpose of welding and electromagnetic shielding.

In such a case, the other side of the coated steel sheet is formed of the chromium-free chemical conversion film described above and has the same corrosion resistance and adhesiveness as conventional chromate films.

The required electrical conductivity of the other side of the coated steel sheet depends on the application and is preferably 500 g or less in terms of conducting load for television covers. 300 g or less is more preferred. The conducting load is the minimum load at which the surface resistivity is 10⁻⁴ ohms or less.

For applications that require moderate corrosion resistance, a coated steel sheet having a chromium-free chemical conversion film alone on the other side can exhibit excellent electromagnetic shielding.

For applications that require high corrosion resistance, the other side of the coated steel sheet preferably has an organic resin layer on the chemical conversion film to improve corrosion resistance. Preferably, the organic resin type of the organic resin layer is an epoxy resin or a polyester resin. Preferably, the organic resin layer contains Ca ion-exchanged silica to further improve corrosion resistance.

Preferably, the organic resin layer has a thickness in the range of .0.1 to 1 µm. An organic resin layer having a thickness of 0.1 µm or more has an advantage in corrosion resistance, and an organic resin layer having a thickness of 1 µm or less has an advantage in electromagnetic shielding.

When any of the coated steel sheets described above is used as a television cover, preferably, the coated steel sheet is entirely convex on the topcoat side.

The phrase "entirely convex on the topcoat side" defines the shape of the whole coated steel sheet and means that the topcoat surface is convex near the center thereof and that the other side (that is, back side) of the coated steel sheet is concave near the center thereof corresponding to the convex portion. A coated steel sheet of such a shape is also herein referred to as "convex coated steel sheet". Such a shape can be formed, for example, by pressing a coated steel sheet according to the present invention.

More specifically, the convex coated steel sheet can be produced by at least one press working selected from the group consisting of deep drawing, bulging, and bending. The resulting convex coated steel sheet is suitable as a material for use in applications that require electromagnetic shielding, such as electronic devices and household electrical appliances. For example, the coated steel sheet used as a plasma display cover or a back cover for use in flat panel displays, such as liquid crystal televisions, exhibits excellent electromagnetic shielding regardless of its large size. The present invention also provides a television cover formed of any of the coated steel sheets described above that is entirely convex on the topcoat side, in which the topcoat of the coated steel sheet faces outward.

A method for manufacturing a coated steel sheet according to the present invention will be described below.

A coated steel sheet according to the present invention is manufactured by applying the above-mentioned chemical conversion treatment to both sides of the above-mentioned galvanized steel sheet, applying an undercoat paint containing a predetermined color pigment to one of the chemical conversion films, heating the steel sheet to form an undercoat, applying an topcoat organic resin mixed with a brightening agent to the undercoat, and heating the steel sheet.

The undercoat paint containing a color pigment and the topcoat paint containing a brightening agent may be applied by any method, preferably by roll coater coating. These paints applied are heat-treated by heating means, such as hot-air drying, infrared heating, or induction heating, to crosslink the organic resin, forming cured topcoat and undercoat. Preferably, the paints are heated at a temperature in the range of 170°C to 250°C (the final temperature of the steel sheet) for 20 to 90 seconds to form the topcoat and the undercoat, thus manufacturing a coated steel sheet.

A heating temperature of 170°C or more is preferred because the cross-linking reaction proceeds sufficiently to achieve satisfactory film performance. A heating temperature of 250°C or less is preferred because the resulting film is easily stabilized and in view of the rationalization of coating and resource conservation. A treatment time of 20 seconds or more is preferred because the cross-linking reaction proceeds easily to achieve satisfactory film performance. A treatment time of 90 seconds or less is advantageous in manufacturing costs. In a coated steel sheet according to the present invention, to further increase the corrosion resistance of the back side of the coated steel sheet, the paint for the organic resin layer is preferably applied to the back side of the steel sheet in the same way.

While some embodiments of the present invention have been described above, various modifications can be made to these embodiments within the scope of the claims.

### EXAMPLES

Examples of the present invention will be described below.

### EXAMPLE 1

An electrogalvanized steel sheet having a thickness of 0**.**5 mm and coated on both sides at 20 g/m² was prepared as a galvanized steel sheet, was degreased, and was subjected to treatments (i) to (iii) described below to manufacture a coated steel sheet sample.
(i) A chemical conversion solution that contains 2% by mass of wet silica (Snowtex O manufactured by Nissan Chemical Industries, Ltd.), 0.8% by mass of phosphoric acid, and 1.2% by mass of Zr compound (ammonium zirconium carbonate manufactured by Daiichi Kigenso Kagaku Kogyo Co., Ltd.) (the remainder: water) was applied to the front side and was heated such that the final sheet temperature reached 100°C in 20 seconds to form a chemical conversion film (0.05 µm) on the front side.
(ii) Then, an undercoat paint containing a color pigment (V Nitto #160, VP-ZW manufactured by Dai Nippon Toryo Co., Ltd.) was applied to the front side, a chemical conversion solution that contains 9.8% by mass of Mn phosphate, 9.8% by mass of phosphoric acid, and 0.4% by mass of reduced V (IV) (the remainder: water) was applied to the back side, and both of the sides were heated such that the final sheet temperature reached 210°C in 30 seconds. This treatment simultaneously forms an undercoat having a dry thickness of 4 µm and composed of 2.8% by mass of carbon black, 65.3% by mass of epoxy-modified polyester resin (Tg: 75°C), 18.3% by mass of inorganic yellow pigment, 12.4% by mass of anticorrosive pigment, and 1.2% by mass of silica on the front side and a chemical conversion film having a thickness of 0.2 µm and composed of Mn phosphate and V on back side.
(iii) Then, a topcoat paint (V Nitto #8900 manufactured by Dai Nippon Toryo Co., Ltd.) containing 0.4% by mass of Al flakes (average particle size of 14 µm and average thickness of 0.4 µm) was applied to the front side (undercoat surface) such that the dry film thickness was 3 µm. An epoxy resin to which Ca-exchanged silica (Shieldex C303 manufactured by Grace Davison, 5.5% by mass) and Mg-treated Al triphosphate (5.5% by mass) were added as anticorrosive pigments was applied to the back side such that the dry film thickness was 0.3 µm. Both of the sides were then heat-treated such that the final sheet temperature reached 230°C in 50 seconds from the start of heating to form a topcoat on the front side and an organic resin layer on the back side.

### EXAMPLE 2

A coated steel sheet sample according to Example 2 was produced by the same process as in Example 1 except that the topcoat was formed such that the content of Al flakes was 1% by mass in the treatment (iii).

### COMPARATIVE EXAMPLES

### COMPARATIVE EXAMPLE 1

A coated steel sheet sample according to Comparative Example 1 was produced by the same process as in Example 1 except that a topcoat free of Al flakes, having a thickness of 4 µm, and composed of 80% by mass of polyester (Tg: 45°C) and 20% by mass of melamine was formed in the treatment (iii).

### COMPARATIVE EXAMPLE 2

A coated steel sheet sample according to Comparative Example 2 was produced by the same process as in Example 1 except that an undercoat free of carbon black, composed of 66% by mass of epoxy-modified polyester resin (Tg: 75°C), 20% by mass of inorganic yellow pigment, 12.4% by mass of anticorrosive pigment, and 1.6% by mass of silica, and having a thickness of 4 µm was formed in the treatment (ii) and that a topcoat composed of 1% by mass of carbon black, 70% by mass of epoxy polyester resin (Tg: 45°C), 15% by mass of melamine resin, and 4% by mass of Al flakes (average particle size of 4 µm and average thickness of 0.3 µm) and having a thickness of 15 µm was formed in the treatment (iii).

The coated steel sheets thus manufactured were subjected to various tests. Evaluation methods used in the present examples will be described below.

### <Evaluation of Front Side>

### (1) Brightness

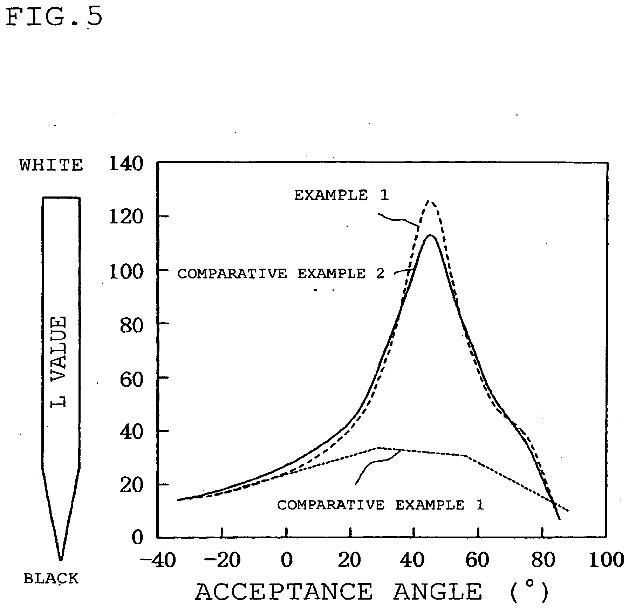

To determine brightness, lightness (L value) of light incident at an angle of 45° to a coated steel sheet was measured with a multiangle colorimeter (VC-2 manufactured by Suga Test Instruments Co., Ltd.) at an acceptance angle of 45°. Table 1 shows the evaluation results based on the following evaluation criterion. For coated steel sheets according to Example 1 and Comparative Examples 1 and 2, variations in lightness (L value) as a function of acceptance angle were measured. Fig. 5 shows the results.
Good: 100 or more
Fair: 90 or more but less than 100
Poor: less than 90

### (2) Substrate-Hiding Capability

To determine substrate-hiding capability, after the front side of the plated steel sheet before film formation was scratched with a metal-tipped pen, the treatment described above was performed to produce a coated steel sheet, and the front side was visually inspected. Table 1 shows the evaluation results based on the following evaluation criterion.
Good: No flaw was observed.
Fair: A slight flaw was observed.
Poor: A flaw was clearly observed.

### (3) Film Adhesiveness

A coated steel sheet was bent at an angle of 180° with the back side of the coated steel sheet facing inward and the front side facing outward while a steel sheet having the same thickness as the coated steel sheet was attached to the back side of the coated steel sheet. A cellophane adhesive tape manufactured by Nichiban Co., Ltd. was attached to the outer surface of the bend of the coated steel sheet (the front side of the coated steel sheet). After the tape was peeled off, the surface state was evaluated.
Good: No abnormality was observed.
Poor: Peeling of a film was observed.

### (4) Scratch Resistance during Pressing

A coated steel sheet was formed into a cylindrical cup at a blank diameter of 67 mmφ, a punch diameter of 33 mmφ, a drawing speed of 380 mm/s, and a blank holding pressure of 20 kN. Damage to a film on the sidewall was visually inspected.
Good: No damage was observed.
Fair: Slight damage was observed.
Poor: Damage was observed.

### <Evaluation of Back Side>

### (5) Electrical Conductivity

The surface resistance of the back side of a coated sheet was measured with a low resistivity meter (Loresta GP, manufactured by Mitsubishi Chemical Co., ESP probe). The load on a probe tip was increased at 20 g/s. The electrical conductivity was defined by the load at which the surface resistivity decreased to 10⁻⁴ ohms or less.

Load at which the surface resistivity decreased to 10⁻⁴ ohms or less
Good: The average load of ten measurements was 300 g or less.
Fair: The average load of ten measurements was more than 300 g but not more than 500 g.
Poor: The average load of ten measurements was more than 500 g.

Table 1 and Fig. 5 show that samples according to Examples 1 and 2 and Comparative Example 2 had excellent brightness, and among others Examples 1 and 2, which are the best modes of the present invention, had high brightness. The samples according to Examples 1 and 2 having a total thickness as small as 7 µm had excellent brightness, substrate-hiding capability, film adhesiveness, scratch resistance during pressing, and electrical conductivity.

| Table 1 | | | | | | | | | | | | | | |
|---|---|---|---|---|---|---|---|---|---|---|---|---|---|---|
| | Undercoat | | | | Topcoat | | | | Total thickness (µm) | Evaluation of Front Side | | | | Evaluation of Back Side |
| | Content of color pigment (mass%) | Content of black pigment | | Thickness (µm) | Content of color pigment (mass%) | Brightening agent | Content of brightening agent (mass%) | Thickness (µm) | | Brightness | Substrate-hiding power | Film adhesiveness | Scratch resistance during pressing | Electrical conductivity |
| | | Based on color pigment (mass%) | Based on undercoat (mass%) | | | | | | | | | | | |
| Example 1 | 21.1 | 13.2 | 2.8 | 4 | 0 | Contained | 0.4 | 3 | 7 | Good | Good | Good | Good | Good |
| Example 2 | 21.1 | 13.2 | 2.8 | 4 | 0 | Contained | 1 | 3 | 7 | Good | Good | Good | Good | Good |
| Comparative Example 1 | 21.1 | 0 | 0 | 4 | 2.8 | - | 0 | 4 | 8 | Poor | Good | Good | Good | Good |
| Comparative Example 2 | 20 | 0 | 0 | 4 | 1 | Contained | 4 | 15 | 19 | Good | Good | Poor | Good | Good |

### Industrial Applicability

The present invention can provide a coated steel sheet for use in television covers that has high brightness and a high capability of hiding the color and flaws of a substrate even when the total thickness of an undercoat and a topcoat is 10 µm or less and a television cover formed of the coated steel sheet.

## Claims

1. A coated steel sheet comprising:
a steel sheet;
a galvanized layer disposed on both sides of the steel sheet;
a chromium-free chemical conversion film disposed on the galvanized layers;
an undercoat containing a color pigment disposed on one of the chemical conversion films; and
an organic resin topcoat containing a brightening agent disposed on the undercoat,
wherein the total thickness of the undercoat and the topcoat is 10 *µ*m or less.

2. The coated steel sheet according to Claim 1, wherein the content of the color pigment in the undercoat is 15% by mass or more.

3. The coated steel sheet according to Claim 1, wherein the color pigment contains at least 5% by mass of black pigment.

4. The coated steel sheet according to Claim 3, wherein the black pigment is carbon black.

5. The coated steel sheet according to Claim 1, wherein the content of the brightening agent in the topcoat ranges from 0.1% to 10% by mass.

6. The coated steel sheet according to Claim 1, wherein the brightening agent comprises A1 flakes.

7. The coated steel sheet according to Claim 1, wherein the thickness of the undercoat ranges from 2 to 9 *µ*m, and the thickness of the topcoat ranges from 1 to 8 *µ*m.

8. The coated steel sheet according to Claim 1, wherein the conducting load of the other side of the coated steel sheet opposite to the topcoat is 500 g or less.

9. The coated steel sheet according to any one of Claims 1 to 8, wherein the coated steel sheet is entirely convex on the topcoat side.

10. A television cover formed of the coated steel sheet according to Claim 9, wherein the topcoat of the coated steel sheet faces outward.

11. A coated steel sheet, wherein a galvanized layer and a chromium-free chemical conversion film are sequentially formed on both sides of a steel sheet, an undercoat containing a color pigment is formed on the chemical conversion film disposed on one side of the steel sheet, a topcoat formed of an organic resin film containing a brightening agent is formed on the undercoat, and the total thickness of the undercoat and the topcoat is 10 *µ*m or less.

## Patentansprüche

1. Beschichtetes Stahlblech, umfassend:
ein Stahlblech;
eine galvanische Schicht, die auf beiden Seiten des Stahlblechs angeordnet ist;
eine chromfreie chemische Umwandlungsschicht, die auf den galvanischen Schichten angeordnet ist;
eine Grundierungsschicht, die ein Farbpigment enthält, und die auf einer der chemischen Umwandlungsschichten angeordnet ist; und
eine organische Harzdeckschicht, die einen Aufheller enthält, und die auf der Grundierungsschicht angeordnet ist,
wobei die Gesamtdicke der Grundierungsschicht und der Deckschicht 10 µm oder weniger beträgt.

2. Beschichtetes Stahlblech gemäß Anspruch 1, wobei der Gehalt des Farbpigments in der Grundierungsschicht 15% in Masse oder mehr beträgt.

3. Beschichtetes Stahlblech gemäß Anspruch 1, wobei das Farbpigment mindestens 5% in Masse schwarzes Pigment enthält.

4. Beschichtetes Stahlblech gemäß Anspruch 3, wobei das schwarze Pigment Ruß ist.

5. Beschichtetes Stahlblech gemäß Anspruch 1, wobei der Gehalt des Aufhellers in der Deckschicht sich von 0,1% bis 10% in Masse erstreckt.

6. Beschichtetes Stahlblech gemäß Anspruch 1, wobei der Aufheller Al Flocken umfasst.

7. Beschichtetes Stahlblech gemäß Anspruch 1, wobei die Dicke der Grundierungsschicht sich von 2 bis 9 µm erstreckt und die Dicke der Deckschicht sich von 1 bis 8 µm erstreckt.

8. Beschichtetes Stahlblech gemäß Anspruch 1, wobei die leitende Last der anderen Seite des beschichteten Stahlblechs, die der Deckschicht gegenüberliegt, 500 g oder weniger beträgt.

9. Beschichtetes Stahlblech gemäß einem der Ansprüche 1 bis 8, wobei das beschichtete Stahlblech auf der Deckschichtseite vollständig konvex ist.

10. Fernseherabdeckung, gebildet aus dem beschichteten Stahlblech gemäß Anspruch 9, wobei die Deckschicht des beschichteten Stahlblechs nach außen gerichtet ist.

11. Beschichtetes Stahlblech, wobei eine galvanische Schicht und eine chromfreie chemische Umwandlungsschicht aufeinander folgend auf den beiden Seiten eines Stahlblechs gebildet werden, eine Grundierungsschicht, die ein Farbpigment enthält, auf der auf einer Seite des Stahlblechs angeordneten chemischen Umwandlungsschicht gebildet wird, eine Deckschicht, die aus einer einen Aufheller enthaltenden organischen Harzschicht ausgebildet ist, auf der Grundierungsschicht gebildet wird, und die Gesamtdicke der Grundierungsschicht und der Deckschicht 10 µm oder weniger beträgt.

## Revendications

1. Tôle d'acier revêtue comprenant :
une tôle d'acier;
une couche galvanisée disposée des deux côtés de la tôle d'acier;
un film de transformation chimique sans chrome disposé sur les couches galvanisées ;
un revêtement de fond contenant un pigment coloré disposé sur un des films de transformation chimique; et
un revêtement de dessus en résine organique contenant un agent d'avivage disposé sur le revêtement de fond,
dans laquelle l'épaisseur totale du revêtement de fond et du revêtement de dessus est de 10 µm ou moins.

2. Tôle d'acier revêtue selon la revendication 1, dans laquelle la teneur en pigment coloré dans le revêtement de fond est de 15 % en masse ou plus.

3. Tôle d'acier revêtue selon la revendication 1, dans laquelle le pigment coloré contient au moins 5 % en masse de pigment noir.

4. Tôle d'acier revêtue selon la revendication 3, dans laquelle le pigment noir est du noir de carbone.

5. Tôle d'acier revêtue selon la revendication 1, dans laquelle la teneur en agent d'avivage dans le revêtement de dessus est dans la plage de 0,1 % à 10 % en masse.

6. Tôle d'acier revêtue selon la revendication 1, dans laquelle l'agent d'avivage comprend des flocons d'Al.

7. Tôle d'acier revêtue selon la revendication 1, dans laquelle l'épaisseur du revêtement de fond est dans la plage de 2 à 9 µm, et l'épaisseur du revêtement de dessus est dans la plage de 1 à 8 µm.

8. Tôle d'acier revêtue selon la revendication 1, dans laquelle la charge conductrice de l'autre côté de la tôle d'acier revêtue, opposé au revêtement de dessus, est de 500 g ou moins.

9. Tôle d'acier revêtue selon l'une quelconque des revendications 1 à 8, dans laquelle la tôle d'acier revêtue est entièrement convexe sur le côté revêtement de dessus.

10. Panneau de télévision formé de la tôle d'acier revêtue selon la revendication 9, dans lequel le revêtement de dessus de la tôle d'acier revêtue fait face vers l'extérieur.

11. Tôle d'acier revêtue, dans laquelle une couche galvanisée et un film de transformation chimique sans chrome sont formés de manière séquentielle des deux côtés d'une tôle d'acier, un revêtement de fond contenant un pigment coloré est formé sur le film de transformation chimique disposé sur un côté de la tôle d'acier, un revêtement de dessus formé d'un film de résine organique contenant un agent d'avivage est formé sur le revêtement de fond, et l'épaisseur totale du revêtement de fond et du revêtement de dessus est de 10 µm ou moins.
